# EUROPÄISCHE PATENTSCHRIFT

(11) **EP 2 769 814 B1**
(45) Veröffentlichungstag und Bekanntmachung des Hinweises auf die Patenterteilung: **17.02.2016**
(21) Anmeldenummer: 14155518.5
(22) Anmeldetag: 18.02.2014
(51) Int. Cl.: B26F 1/26, B24C 1/04

(54) **Verfahren zum Bohren mindestens eines Loches in einem Werkstück**
Method for drilling at least one hole in a workpiece
Procédé de perçage d'au moins un trou dans une pièce

(30) Priorität: 21.02.2013 CH 4932013
(43) Veröffentlichungstag der Anmeldung: 27.08.2014
(73) Patentinhaber: Micromachining AG, 4912 Aarwangen (CH)
(72) Erfinder: Maurer, Walter, 4665 Oftringen (CH)
(74) Vertreter: AMMANN PATENTANWÄLTE AG BERN

(56) Entgegenhaltungen:
- EP-A1- 2 301 730
- EP-A2- 0 984 265
- WO-A1-92/13679
- WO-A1-2012/065580
- US-A- 4 955 164
- US-A- 5 140 127
- US-A1- 2009 084 235
- US-B1- 6 800 829

## Beschreibung

Die vorliegende Erfindung bezieht sich auf ein Verfahren zum Bohren mindestens eines Loches in einem Werkstück.

Das Bohren in einem Werkstück ist u. a. dann schwierig, wenn dieses einen oder mehrere Hohlräume oder allgemein Wandabschnitte aufweist, die hintereinander versetzt angeordnet sind. So behindert der in Bohrrichtung gesehene hintere Wandabschnitt ein Bohren im vorderen Wandabschnitt. Im Weiteren sind auch Massnahmen zu treffen, welche eine Beschädigung dieses Wandabschnitts verhindern, wenn der Durchbruch beim vorderen Wandabschnitt erfolgt. Derartig schwer zu bohrende Werkstücke liegen beispielsweise in Form von Turbinenschaufeln vor, in welchen eine Vielzahl von Löchern zur Kühlung anzubringen ist.

Es ist bekannt, mittels Laser oder Funkenerodierung ("Electrical Discharge Machining") Löcher in derartige Werkstücke zu bohren (vgl. z. B. US 7,041,933 B1). Diese Verfahren haben den Nachteil, dass der Materialabtrag durch Hitzeentwicklung erfolgt, was u. a. zu unerwünschten Beschädigungen von empfindlichen Schichten führen kann. Die Funkenerodierung hat den weiteren Nachteil, dass sie nur bei leitfähigen Werkstücken einsetzbar ist.

Als Alternative ist es bekannt, flüssige Bearbeitungsstrahlen zum Bohren zu verwenden. Diese Art von Bearbeitung hat den Vorteil, dass beim Bohren keine Hitze entsteht und auch nicht-leitfähige Werkstücke bearbeitbar sind. Aus der EP 1 408 196 A2 ist es bekannt, den Bearbeitungskopf, aus welchem der Bearbeitungsstrahl beim Bohren austritt, in einen Hohlraum des Werkstücks einzuführen und das Loch von innen nach aussen zu bohren.

Dieses Verfahren hat den Nachteil, dass es nur für spezielle Geometrien von Werkstücken und Löchern anwendbar ist. Ein Bohren ist besonders dann nicht möglich, wenn der Hohlraum nicht für den Bearbeitungskopf zugänglich ist und/oder die Bohrrichtung z. B. senkrecht zur Werkstücksoberfläche gerichtet ist.

Aus der US 4,955,164 ist ein Verfahren zum Bohren eines Loches mittels Abrasivstrahls bekannt, welcher permanent auf das Werkstück einwirkt. Es ist daher schwierig, gezielt die Wirkung des Strahls dann zu stoppen, wenn er das Werkstück durchschlägt.

In der WO 92/13679 A1 ist ein Verfahren beschrieben, bei welchem ein Ultraschallerzeuger verwendet wird, um Kavitationsblasen in einem Bearbeitungsstrahl aus reinem Wasser zu bilden. Das beschriebene Verfahren ist nicht geeignet, um Löcher in einem Werkstück so zu bohren, dass unerwünschte Beschädigungen verhindert werden.

Es ist eine Aufgabe der vorliegenden Erfindung, ein Verfahren zum Bohren mindestens eines Loches in einem Werkstück mit hintereinander angeordneten Wandabschnitten mittels eines flüssigen Bearbeitungsstrahls anzugeben, wobei das Verfahren für vielfältige Werkstücksgeometrien anwendbar ist und unerwünschte Wandbeschädigungen weitgehend vermeidet.

Ein Verfahren, das diese Aufgabe löst, ist im Anspruch 1 angegeben. Die weiteren Ansprüche geben bevorzugte Ausführungen des Verfahrens, eine Bearbeitungsanlage, mit welcher das Verfahren durchführbar ist, sowie ein Computerprogramm und einen Datenträger an.

Beim Verfahren gemäss dem Anspruch 1 wird das Loch zumindest teilweise gebohrt, indem der Bearbeitungsstrahl gepulst auf den vorderen Wandabschnitt auftrifft.

Dies erlaubt ein rationelles Bohren des Loches. Erfolgt der Durchbruch mittels gepulstem Bearbeitungsstrahls, so kann das Bohren rechtzeitig beendet werden und Beschädigungen des Wandabschnittes sind weitgehend vermeidbar, welcher in Bohrrichtung gesehen hinter dem gebohrten Wandabschnitt angeordnet ist. Im Weiteren ist eine Bohrrichtung möglich, die von der Aussenseite des Werkstücks nach innen zeigt, sodass das Verfahren für vielfältige Werkstücksgeometrien und Bohrrichtungen einsetzbar ist.

Erfindungsgemäß wird das Loch so erzeugt, dass es zumindest teilweise durch Verwendung von Flüssigkeit und Abrasivmaterial gebohrt wird.

Um die Gefahr von Wandbeschädigungen noch weiter zu reduzieren werden vorzugsweise ein fliessfähiges Schutzmittel zum Befüllen des Werkstücks und/oder Sensormittel eingesetzt, um den Zeitpunkt zu erfassen, bei welchem der Bearbeitungsstrahl den vorderen Wandabschnitt durchbricht.

Die Erfindung wird im Folgenden anhand von Ausführungsbeispielen unter Bezugnahme auf Figuren erläutert.

Es zeigen
Fig. 1 eine perspektivische Ansicht einer Anlage zum Bohren von Löchern;
Fig. 2 eine teilweise geschnittene Detailansicht aus Fig. 1;
Fig. 3 eine Detailansicht aus Fig. 2;
Fig. 4 eine Variante einer Zufuhreinrichtung für eine Anlage gemäss Fig. 1 in einer teilweise geschnittenen Vorderansicht;
Fig. 5 ein in der Anlage gemäss Fig. 1 einsetzbares Verzweigungsteil in einer Seitenansicht;
Fig. 6 ein Beispiel einer Turbinenschaufel als Werkstück im Querschnitt;
Fig. 7 den zeitlichen Verlauf verschiedener Prozessparameter sowie verschiedener Messsignale von Sensoren, welche in der Anlage gemäss Fig. 1 eingesetzt werden; und
Fig. 8 ein Beispiel eines Verfahrensablaufs zum Bohren von Löchern.

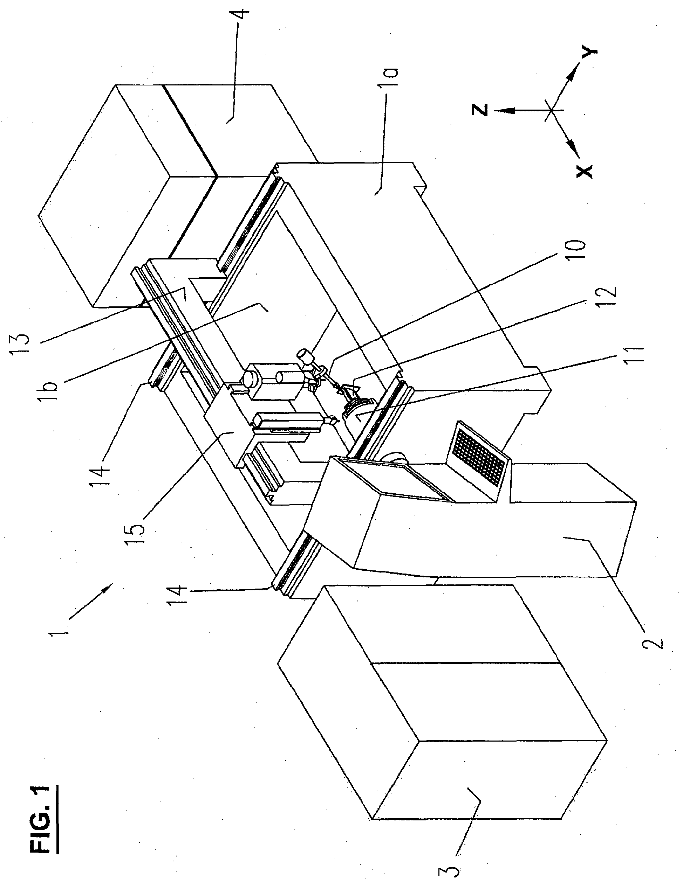

Fig. 1 zeigt eine Anlage zum Bearbeiten eines Werkstücks mit einer Bearbeitungsvorrichtung 1, einer Bedienungsvorrichtung 2, einem Schaltschrank 3 und einer Pumpenvorrichtung 4.

Die Bearbeitungsvorrichtung 1 umfasst einen Bearbeitungskopf 10, aus welchem im Betrieb ein Bearbeitungsstrahl austritt, und eine Halteeinrichtung 11 zum Halten eines Werkstücks 12. Im vorliegenden Ausführungsbeispiel ist die Bearbeitungsvorrichtung 1 eingerichtet, einen Bearbeitungsstrahl aus einer Flüssigkeit mit oder ohne Abrasivmaterials zu erzeugen. Als Flüssigkeit ist z. B. Wasser geeignet, das Abrasivmaterial ist beispielsweise Sand. Es sind auch andere Medien für die Flüssigkeit möglich, z. B. Öl. Weiter ist es denkbar, der Flüssigkeit einen oder mehrere Zusätze, z. B. Polymere, beizugeben, um die Wirksamkeit des Bearbeitungsstrahls zu verbessern.

Die Bearbeitungsvorrichtung 1 weist weiter ein durch Wände 1a begrenztes Becken 1b auf, in welchem die Halteeinrichtung 11 mit dem Werkstück 12 angeordnet ist und in welches der Bearbeitungskopf 10 hineinragt.

Die Bedienungsvorrichtung 2 umfasst Geräte zur Ausgabe und/oder Eingabe von Informationen, beispielsweise Tastatur, Monitor und/oder Zeigegerät. Der Schaltschrank 3 umfasst die Steuerung, welche Mittel enthält zur Datenverarbeitung und zur Erzeugung von Steuersignalen zum Betreiben der Bearbeitungsvorrichtung 1. Die Steuerung ist mit einem Programm ausgestattet, bei dessen Ausführung das weiter unten beschriebene Verfahren zum Bohren von Löchern im Werkstück 12 durchführbar ist. Die Steuerung ist z. B. in Form einer CNC-Steuerung ausgebildet.

Die Pumpenvorrichtung 4 ist eingerichtet, um die Flüssigkeit, z. B. Wasser oder ein anderes Medium, unter Hochdruck zum Bearbeitungskopf 10 zu leiten.

Der Bearbeitungskopf 10 ist in mehreren Achsen bewegbar, im vorliegenden Ausführungsbeispiel sind dies 5 Achsen. Zu diesem Zweck umfasst die Bearbeitungskopf 10 eine in der Y-Achse verfahrbare Brücke 13, an welcher ein Träger 15 angeordnet ist. Zum Verschieben der Brücke 13 dienen z. B. Schienen 14, welche auf den Wänden 1a angeordnet sind. Der Träger 15 trägt den Bearbeitungskopf 10 und ist in der X-Achse und somit quer zur Y-Achse entlang der Brücke 13 verschiebbar.

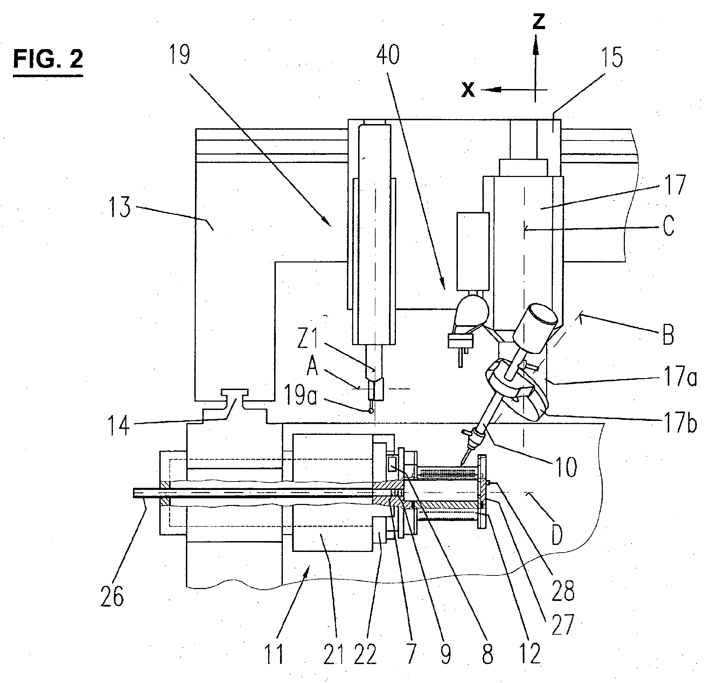

Wie die Detailansicht in Fig. 2 zeigt, ist der Bearbeitungskopf 10 am Träger so gehalten, dass er in der Z-Achse und somit quer zur X-Achse verschiebbar ist. Der Bearbeitungskopf 10 ist weiter um zwei Drehachsen B und C drehbar gelagert. Die Drehachse C verläuft hier in Richtung der Z-Achse. Die beiden Achsen B und C sind unter einem Winkel zueinander angeordnet. Der Winkel ist an den Anwendungszweck der Anlage angepasst und kann im Bereich von 45 bis 90 Grad liegen. Eine am Träger 15 angeordnete Antriebseinrichtung 17 dient zur Bewegung des Bearbeitungskopfs 10 in der Z-, B- und C-Achse. Die Antriebseinrichtung 17 weist einen um die Achse C drehbaren Drehkopf 17a mit einem schräg ausgeführten Ende auf. Dieses umfasst ein um die Achse B drehbares Drehteil 17b, an welchem der Bearbeitungskopf 10 gehalten ist.

Am Träger 15 sind weiter eine Zufuhreinrichtung 40 zum Beifügen von Abrasivmaterial sowie eine Messeinrichtung 19 angeordnet.

Die Messeinrichtung 19 dient zum Ausmessen des Werkstücks 12 und enthält z. B. einen Messlaser. Die Messeinrichtung 19 umfasst einen Messkopf 19a, welcher hier am Träger 15 so angeordnet ist, dass er entlang einer zur Z-Achse parallelen Achse Z1 verschiebbar sowie um eine quer dazu angeordnete Drehachse A drehbar ist.

Vor der Verarbeitung kann die genaue Lage der Werkstücksoberfläche noch undefiniert sein, beispielsweise aufgrund der Herstellungsart des Werkstücks 12, z. B. wenn es als Gussteil gefertigt ist, und/oder aufgrund des Einspannens. Mittels der Messeinrichtung 19 sind die Konturen des Werkstücks 12 erfassbar, so dass der Bearbeitungskopf 10 präzise in Bezug auf die Werkstücksoberfläche positionierbar ist und die Löcher an den gewünschten Stellen im Werkstück 12 gebohrt werden können.

Die Halteeinrichtung 11 umfasst hier ein Spannfutter 21, in welchem ein Adapterteil 22 zum Halten des Werkstückes 12 eingespannt ist. Die Halteeinrichtung 11 weist eine Drehachse D auf, um welche das Werkstück 12 drehbar ist.

Die Anlage ist hier speziell zum Bohren von Löchern im Werkstück 12 ausgelegt, welches einen oder mehrere Hohlräume oder allgemein Wandabschnitte aufweist, die hintereinander versetzt angeordnet sind. Die Halteeinrichtung 11 umfasst einen Anschluss 26 zum Einleiten einer Flüssigkeit als Schutzmittel, mit welcher das Werkstück 12 bei der Bearbeitung befüllt werden soll. Vorzugsweise wird für den Bearbeitungsstrahl und für das Schutzmittel dieselbe Flüssigkeit, z. B. Wasser eingesetzt. Zur Abdichtung ist das freie Ende des Werkstücks 12 mit einem Flansch 27 versehen, der geeignete Dichtungen aufweist. Es sind Ventilmittel 28, z. B. am Flansch 27 vorgesehen, welche ein Entlüften des Werkstücks 12 erlauben, wenn dieses mit dem Schutzmittel gefüllt wird. Weiter können die Ventilmittel 28 so ausgelegt sein, dass das Schutzmittel aus dem Werkstück 12 entweichen kann, wenn der Druck p des Schutzmittels eine bestimmte Schwelle übersteigt. Zu diesem Zweck umfassen die Ventilmittel 28 ein Überdruckventil.

Zur Prozessüberwachung sind Sensormittel 7, 8, 9 vorgesehen. Diese sind so ausgelegt, dass besonders der Zeitpunkt detektierbar ist, wenn der Bearbeitungsstrahl die Wand des Werkstücks 12 durchbricht.

Als Sensormittel dienen hier u. a. ein Drucksensor 7 zum Messen des Druckes p, welcher das Schutzmittel im Werkstück 12 aufweist, sowie ein Schallwandler 9, mittels welchem sich im flüssigen Schutzmittel ausbreitender Schall erfassbar ist. Wird Wasser als Schutzmittel verwendet, so ist der Schallwandler 9 z. B. in Form eines Unterwassermikrofons ausgebildet. Die Sensoren 7 und 9 befinden sich gemäss Fig. 2 beim Adapterteil 22. Sie können jedoch auch an anderen Stellen angeordnet sein, um Druck und Schall zu messen. Durch geeignete Auslegung der Ventilmittel 28 kann der Schallwandler 9 vor einer übermässigen Druckbelastung während des Betriebs geschützt werden.

Die Sensormittel weisen weiter einen Sensor 8 auf, der sich ausserhalb des Werkstücks 12 befindet, z. B. so wie in Fig. 2 gezeigt an der Halteeinrichtung 11. Er kann aber auch an einer anderen Stelle der Bearbeitungsvorrichtung 1 angeordnet sein.

Während der Bearbeitung entsteht in den Maschinenelementen Körperschall, der zu Schwingungen führt. Als Sensor 8 ist daher z. B. ein Körperschallsensor ("Acoustic Emission Sensor") geeignet. Da der Bearbeitungsstrahl mit hoher Geschwindigkeit aus dem Bearbeitungskopf 10 austritt, wird ebenfalls messbarer Schall erzeugt, der sich in der Luft ausbreitet. Es ist daher auch möglich, alternativ oder ergänzend ein Mikrofon als Sensor 8 einzusetzen.

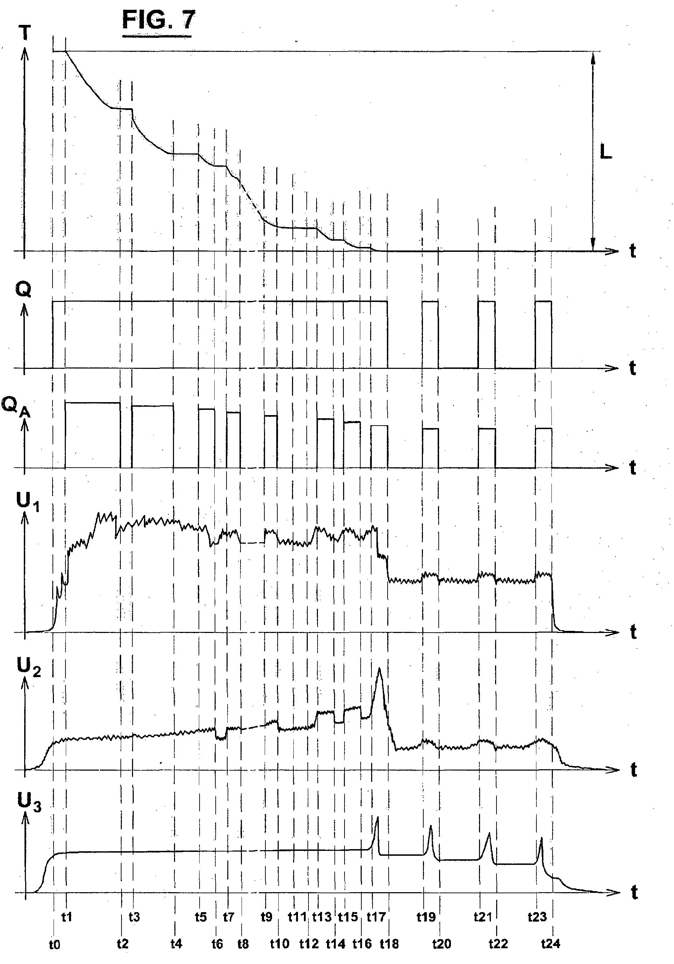

Durchbricht der Bearbeitungsstrahl beim Bohren die Wand des Werkstücks 12, so ändern sich die von den Sensormitteln 7, 8, 9 gelieferten Messsignale merklich (vgl. die unten stehende Erklärung zur Fig. 7).

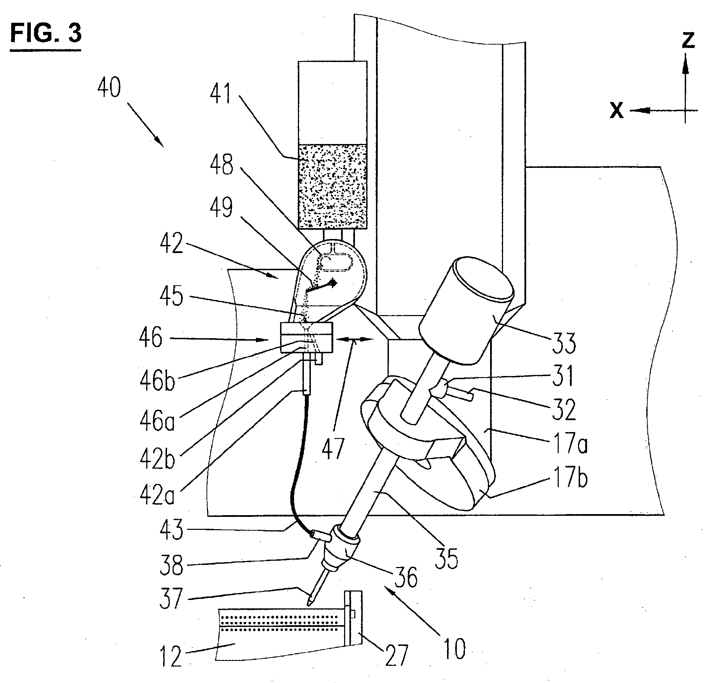

Wie auch in Fig. 3 gezeigt, befindet sich am einlassseitigen Ende des Bearbeitungskopfs 10 ein Hockdruckventil 31 zum Ein- und Abschalten des Bearbeitungsstrahls. Dieses weist einen Einlass 32 auf, in welchen die Pumpenvorrichtung 4 über eine (nicht dargestellte) Hochdruckleitung die Flüssigkeit unter Hochdruck einleitet. Zum Schalten des Hockdruckventils 31 dient eine darauf aufgesetzte Betätigungseinrichtung 33.

Der Bearbeitungskopf 10 ist hier drehbar gelagert. Die Ankopplung der Hochdruckleitung an den Einlass 32 erfolgt über übliche Komponenten, wie Hochdruckleitungsspiralen und Drehgelenke, welche das Schwenken des Bearbeitungskopfs 10 relativ zur stationären Pumpenvorrichtung 4 ermöglichen.

Zur Bildung des Bearbeitungsstrahls weist der Bearbeitungskopf 10 weiter ein Kollimationsrohr 35 auf, das zur Leitung und Strömungsberuhigung der eingeleiteten Flüssigkeit dient und das über ein Zwischenteil 36 mit dem Fokussierrohr 37 verbunden ist. Im Zwischenteil 36 befindet sich eine Düse zur Umwandlung der Druckenergie in Bewegungsenergie sowie eine Mischkammer, in welcher ein Einlassstutzen 38 mündet zur Zuführung von Abrasivmaterial. Das Fokussierrohr 37 dient zur Beschleunigung des Abrasivmaterials sowie zum Ausrichten und Bündeln der Flüssigkeit bzw. des Flüssigkeits-Abrasivgemisches.

In Fig. 3 ist weiter die Zufuhreinrichtung 40 ersichtlich. Sie umfasst einen Behälter 41 zum Lagern des Abrasivmaterials und eine Dosiereinrichtung 42 mit einem Zufuhrauslass 42a, welcher über eine Leitung 43 mit dem Einlassstutzen 38 am Zwischenteil 36 verbunden ist.

Die Dosiereinrichtung 42 ist so eingerichtet, dass die Menge Q_{A} an Abrasivmaterial (z. B. in Einheiten von Gramm pro Minute), welche aus dem Zufuhrauslass 42a austritt, gesteuert einstellbar ist. Hier ist die Dosiereinrichtung 42 so ausgestaltet, dass in kurzer Zeit t_{U} zwischen den beiden Zuständen, Q_{A} gleich Null und Q_{A} grösser als Null, umgeschaltet werden kann. Insbesondere ist die Dosiereinrichtung 42 so eingerichtet, dass beim Zustand Q_{A} > 0 Arbasivmaterial mit konstantem Q_{A} aus dem Zufuhrauslass 42a austritt. Typischerweise liegt die Umschaltzeit t_{U} im Bereich von 10 bis 200 Millisekunden, vorzugsweise im Bereich von 20 bis 100 Millisekunden.

Im vorliegenden Ausführungsbeispiel umfasst die Dosiereinrichtung 42 ein in Fig. 3 gestrichelt dargestelltes Förderband 48, welches umlaufend und antreibbar ist, einen Einlass 45, welcher vorzugsweise durch sich verjüngende Wände begrenzt ist, und ein Schiebeteil 46, welches zwei in Fig. 3 gestrichelt dargestellte Kanäle 46a und 46b aufweist sowie einen Ablauf 42b. Weiter enthält die Dosiereinrichtung 42 ein Messmittel 49, welches zur Bestimmung von Menge Q_{A} ausgestaltet ist. Das Messmittel 49 dient als Waage und umfaßt zu diesem Zweck beispielsweise einen Dehnungsmessstreifen. Dieser verläuft schräg, so dass Abrasivmaterial, welches vom Förderband 48 herunterfällt, weiter nach unten zum Schiebeteil 46 fallen kann. Dabei verformt sich der Dehnungsmessstreifen in Abhängigkeit der darauf fallenden Menge an Abrasivmaterial und liefert ein entsprechendes Messsignal.

Das Schiebeteil 46 ist relativ zum Einlass 45 zwischen zwei Verschiebestellungen hin und her verschiebbar, wie dies durch den Pfeil 47 angedeutet ist. Die Verschiebung des Schiebeteils 46 erfolgt z. B. mittels Elektroantrieb oder Druckluft.

In der einen Verschiebestellung des Schiebeteils 46 ist der zum Zufuhrauslass 42a führende Kanal 46a mit dem Einlass 45 verbunden. Im Betrieb fällt das vom Förderband 48 geförderte Abrasivmaterial aufgrund der Gravitation zum Einlass 45, wo es über die Leitung 43 zum Bearbeitungskopf 10 gelangt und schliesslich der Flüssigkeit beigemischt wird. In der anderen Verschiebestellung des Schiebeteils 46 ist der zum Ablauf 42b führende Kanal 46b mit dem Einlass 45 verbunden, so dass das angeförderte Abrasivmaterial über den Ablauf 42b nach aussen gelangt und ins Becken 1b fällt. Der Kanal 46b wirkt demnach als Bypasskanal. Optional kann der Ablauf 42b mit einer Leitung verbunden sein, um das Abrasivmaterial zu einem Sammelbehälter zu leiten.

Alternativ zu einer translatorischen Bewegung des Schiebeteils 46 ist es auch denkbar, die Dosiereinrichtung 42 so auszugestalten, dass das Schiebeteil 46 relativ zum Behälter 41 zwischen zwei Stellungen hin und zurück drehbar ist.

Die Verwendung des bewegbaren Schiebeteils 46 hat den Vorteil, dass in kurzer Zeit t_{U} zwischen den beiden Stellungen hin und her geschaltet werden kann und dass das Förderband 48 permanent im Betrieb bleibt, so dass Schwankungen in Q_{A} vermieden werden und möglichst gleichmässig Abrasivmaterial, welches der Flüssigkeit beigemischt werden soll, über die Leitung 43 zum Bearbeitungskopf 10 befördert wird.

In einer einfacheren Ausführungsform kann das Schiebeteil 46 mit Ablauf 42b auch weggelassen sein, sodass z. B. durch Anhalten des Förderbandes 48 die Zufuhr von Abrasivmaterial zum Bearbeitungskopf 10 unterbrochen wird.

Es sind auch andere Ausführungsformen der Dosiereinrichtung 42 denkbar, um die Zufuhr von Abrasivmaterial wahlweise zuzulassen und zu unterbrechen.

Die Dosiereinrichtung 42 kann z. B. eine Einrichtung umfassen, welche eine einstellbare, volumetrische Förderung des Abrasivmaterials ermöglicht. Zu diesem Zweck ist beispielsweise ein antreibbares Drehteil vorgesehen, das bei der Drehung Abrasivmaterial durch einen Kanal leitet. Auch ist es denkbar, mittels Unterdruck Abrasivmaterial anzusaugen und/oder umzuleiten.

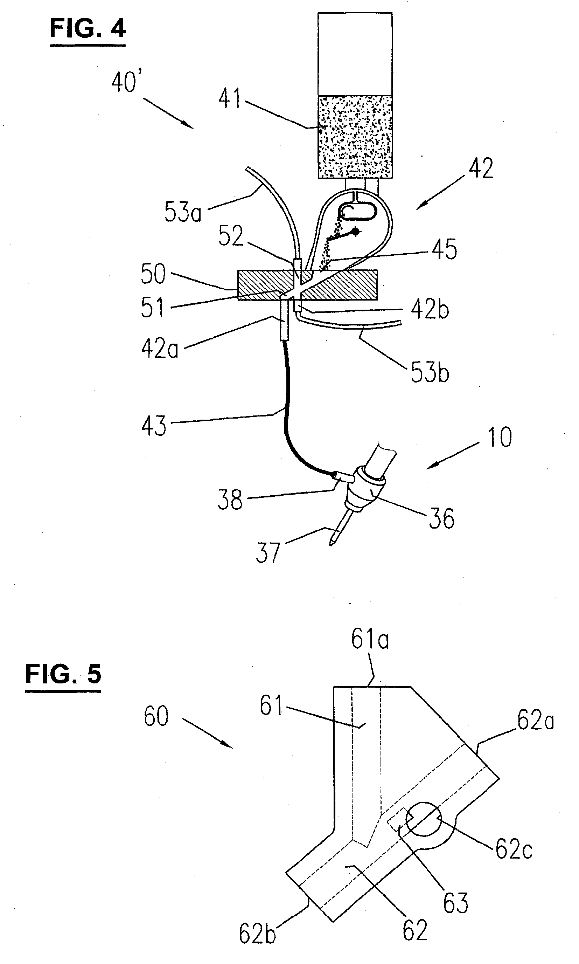

Fig. 4 zeigt eine Variante einer Zufuhreinrichtung 40', bei welcher anstelle des Schiebeteils 46 in Fig. 3 ein Kreuzungsteil 50 mit einem Kanal 51 vorgesehen ist, der von einem Luftkanal 52 gekreuzt wird. Die beiden Enden des Luftkanals 52 sind an Leitungen 53a, 53b angeschlossen, um im Ablauf 42b bei Bedarf einen Unterdruck zu erzeugen.

Im Zustand der Beimischung gelangt Abrasivmaterial vom Einlass 45 über den Kanal 51 zum Zufuhreinlass 42a und weiter über die Leitung 43 zum Bearbeitungskopf 10. Soll die Beimischung unterbrochen werden, wird im Luftkanal 52 ein Unterdruck erzeugt, so dass das Abrasivmaterial nicht mehr zum Zufuhreinlass 42a geleitet wird, sondern durch das untere Ende des Luftkanals 52 hindurch zum Ablauf 42b und weiter durch die Leitung 53b gesogen wird. Der Luftkanal 52 wirkt demnach als Bypasskanal.

Optional sind Massnahmen getroffen, um zu verhindern, dass die Dosiereinrichtung 42 verstopft wird, wenn es zu einem Rückstau von Flüssigkeit aus dem Bearbeitungskopf 10 in die Leitung 43 kommt und dabei das Abrasivmaterial benetzt wird.

Fig. 5 zeigt ein Verzweigungsteil 60, welches zur Verhinderung einer derartigen Verstopfung dient und z. B. in die Leitung 43 eingebaut wird. Das Verzweigungsteil 60 weist einen Kanal 61 mit Einlass 61a auf, welcher in einem Hilfskanal 62 mündet, der einen Einlass 62a und einen Auslass 62b aufweist. Der Einlass 61a ist z. B. mit dem Zufuhreinlass 42a der Dosiereinrichtung 42 verbunden. Der Auslass 62b ist mit dem Bearbeitungskopf 10 verbunden. Am Einlass 62a wird eine Leitung zur Zufuhr eines Prozessgases, z. B. Luft angeschlossen. Im Hilfskanal 62 mündet ein Hilfsauslass 62c. Der Druck des Prozessgases ist so eingestellt, dass im Betrieb mehr Prozessgas durch den Einlass 62a zugeführt wird als im Auslass 62b abgeleitet wird. Es strömt somit ein Teil des Prozessgases aus dem Hilfsauslass 62c.

Das über den Einlass 62a zugeführte Prozessgas kann aufbereitet sein, um die Bearbeitung zu unterstützen. Beispielsweise ist das Prozessgas so aufbereitet, dass es eine möglichst geringe Feuchtigkeit aufweist und so einer Verstopfung durch Abrasivmaterial vorgebeugt wird.

Weiter ist im Hilfskanal 62 ein Sensor 63 angeordnet, mittels welchem vom Bearbeitungskopf 10 her rückstauende Flüssigkeit detektierbar ist. Der Sensor 63 ist z. B. als kapazitiver Sensor ausgebildet.

Im Normalbetrieb gelangt das Abrasivmaterial von der Zufuhreinrichtung 40 über den Einlass 61a und den Kanälen 61 und 62 zum Auslass 62b und weiter zum Bearbeitungskopf 10. Kommt es nun zu einem Rückstau, so gelangt Flüssigkeit durch den Auslass 62b in den Hilfskanal 62, wo sie vom Sensor 63 detektiert wird. In diesem Fall wird der Betrieb der Anlage unterbrochen und der Benutzer kann die Ursache des Rückstaus beheben.

Nachfolgend wird ein Verfahren zum Bohren von Löchern in einem Werkstück beschrieben.

Das zu bearbeitende Werkstück 12 weist mindestens zwei Wandabschnitte auf, die beabstandet und in Bohrrichtung gesehen hintereinander angeordnet sind. Wird im ersten Wandabschnitt ein Loch gebohrt, so befindet sich der zweite Wandabschnitt in Bohrrichtung gesehen hinter dem ersten Wandabschnitt. Durchbricht der Bearbeitungsstrahl den ersten Wandabschnitt, so ist es in der Regel zu vermeiden, dass der Strahl auf den zweiten Wandabschnitt auftrifft und diesen so beschädigt.

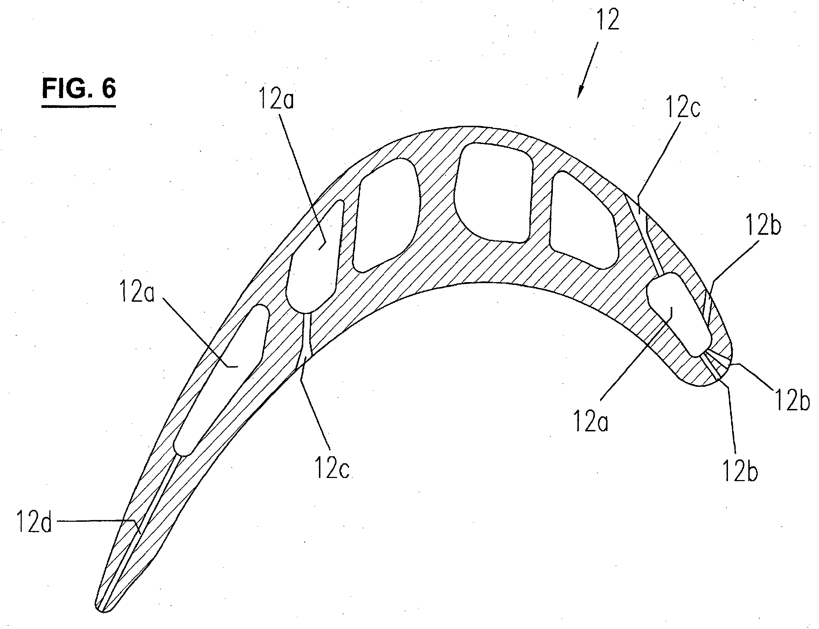

Fig. 6 zeigt ein Beispiel eines gefertigten Werkstücks 12 mit mehreren Hohlräumen 12a, die über gebohrte Löcher 12b, 12c, 12d mit der Aussenfläche verbunden sind. Das Werkstück 12 ist hier eine Turbinenschaufel, welche für hohe Betriebstemperaturen einsetzbar sein soll. Durch das Vorsehen der Löcher 12b, 12c, 12d kann Luft mit hohem Druck ausgeblasen werden, um so die Turbinenschaufel zu kühlen. Wie ersichtlich können die Löcher sehr nahe an den inneren Wandabschnitten münden (vgl. die Löcher 12b), so dass dort besonders die Gefahr einer Beschädigung besteht. Im Weiteren können die Löcher eine Form haben, die nicht kreiszylindrisch ist (vgl. beispielsweise die Löcher 12c, welche ein sich zur Aussenfläche hin aufweitendes Ende aufweisen) und/oder die eine grosse Länge haben (vgl. Loch 12d).

Beim nachfolgend beschriebenen Verfahren können die zu bohrenden Löcher z. B. so ausgebildet sein, wie in Fig. 6 gezeigt.

Zum Bohren wird die Anlage so betrieben, dass der Bearbeitungsstrahl wahlweise kontinuierlich (nachfolgend "kontinuierlicher Modus" genannt) oder gepulst (nachfolgend "gepulster Modus" genannt) auf das Werkstück einwirkt. Im kontinuierlichen Modus tritt der Bearbeitungsstrahl permanent aus dem Bearbeitungskopf 10 auf das Werkstück 12, wobei dem Bearbeitungsstrahl kontinuierlich Abrasivmaterial beigemischt wird. Auf das Werkstück 12 wirkt demnach fortlaufend ein Abrasivflüssigkeitsstrahl. Im gepulsten Modus wird entweder die Beimischung des Abrasivmaterials wiederkehrend unterbrochen, so dass nur noch ein Bearbeitungsstrahl aus reiner Flüssigkeit auf das Werkstück trifft, oder es wird das Auftreffen des ganzen Bearbeitungsstrahls auf das Werkstück wiederkehrend unterbrochen.

Fig. 7 zeigt ein Beispiel des zeitlichen Verlaufs folgender Parameter:
- T (z. B. in Einheiten von Millimeter):
   noch zu bohrende Lochtiefe; am Anfang entspricht T der Gesamtlänge L des zu bohrenden Loches, beim Durchbruch ist T = 0,
- Q (z. B. in Einheiten von Liter pro Minute):
   Volumenstrom der aus dem Bearbeitungskopf 10 austretenden Flüssigkeit,
- Q_{A} (z. B. in Einheiten von Gramm pro Minute):
   Menge an Abrasivmaterial, welche pro Zeiteinheit aus dem Bearbeitungskopf 10 austritt,
- U₁ (z. B. in Einheiten von Volt oder Ampere):
   entspricht dem vom Sensor 8 gelieferten Sensorsignal für den gemessenen Körperschall,
- U₂ (z. B. in Einheiten von Volt oder Ampere):
   entspricht dem vom Sensor 7 gelieferten Sensorsignal für den Schall im flüssigen Schutzmittel,
- U₃ (z. B. in Einheiten von Volt oder Ampere):
   entspricht dem vom Sensor 9 gelieferten Sensorsignal für den Druck des flüssigen Schutzmittels.

Auf der jeweiligen Zeitachse t sind verschiedene Zeitpunkte t0, t1, t2, ..., t24 markiert. Fig. 7 zeigt nicht den ganzen Verlauf, sondern die Zeitachse ist zwischen t8 und t9 unterbrochen dargestellt. In diesem Zeitintervall ist der jeweilige Verlauf z. B. ähnlich wie in den Zeitintervallen davor oder danach.

Zum Zeitpunkt t0 beginnt der Bohrvorgang. Dabei erfolgt die Bearbeitung beim hier gezeigten Beispiel zuerst im kontinuierlichen Modus, bis die gebohrte Tiefe einen bestimmten Anteil der Gesamtlänge L des zu bohrenden Loches erreicht hat. Danach geht die Bearbeitung im gepulsten Modus weiter. Dies ist beim Beispiel gemäss Fig. 7 ab dem Zeitpunkt t4 der Fall. Je nach der Grösse von L kann die Bearbeitung auch so erfolgen, dass die Gesamtlänge L im gepulsten Modus gebohrt wird. Dies ist typischerweise für eine Gesamtlänge L der Fall, welche höchstens 2 mm, vorzugsweise höchstens 1 mm beträgt und/oder mindestens 8 mm, vorzugsweise mindestens 10 mm beträgt. Im Zwischenbereich, wo L zwischen 1 mm und 10 mm, vorzugsweise zwischen 2 mm und 8 mm liegt, kann die Bearbeitung so erfolgen, dass ein Anteil der Gesamtlänge L im kontinuierlichen Modus und ein Anteil der Gesamtlänge L im gepulsten Modus gebohrt wird.

Auch innerhalb des kontinuierlichen Modus ist es denkbar, dass die Zufuhr von Abrasivmaterial unterbrochen wird. So kann es je nach Tiefe des zu bohrenden Loches beispielsweise vorkommen, dass sich Abrasivmaterial am dem sich bildenden Bohrende, das durch den Bearbeitungsstrahl vorangetrieben wird, Abrasivmaterial ansammelt. Dieses kann dämpfend wirken, so dass der Bearbeitungsstrahl mit verminderter Energie auf das Werkstück auftrifft. Um dieses angesammelte Abrasivmaterial aus dem Bohrende zu befördern, ist es möglich während des kontinuierlichen Modus ein oder mehrmals die Zufuhr von Abrasivmaterial zu unterbrechen, so dass das bis dahin gebohrte Loch mit reiner Flüssigkeit ausgewaschen wird. In Fig. 7 ist dieser Unterbruch bei der Kurve Q_{A} im Zeitintervall t2 bis t3 beispielhaft dargestellt.

Beim gepulsten Modus wird der ganze Bearbeitungsstrahl zeitweilig ausgeschaltet oder lediglich die Zufuhr von Abrasivmaterial. Letzteres kann - wie oben erläutert - nötig sein, um angesammeltes Abrasivmaterial aus dem Bohrloch herauszuwaschen. Im Beispiel gemäss Fig. 7 ist der Unterbruch der Zufuhr von Abrasivmaterial im Zeitintervall t10 bis t13 zu sehen.

Der gepulste Modus ist beim Bohren so ausgelegt, dass die Pulsbreite (z. B. Intervall von t12 bis t13) kleiner ist als das zeitliche Intervall zwischen den Pulsen (z. B. Intervall von t13 bis t14). Typischerweise liegt die zeitliche Länge der Pulse im Bereich von 80 bis 200 Millisekunden, während die zeitliche Länge des Unterbruchs zwischen den Pulsen im Bereich von 50 bis 120 Millisekunden liegt.

Durchdringt nun der Bearbeitungsstrahl die Wand des Werkstücks, so ändern sich die von den Sensormitteln 7, 8, 9 gelieferten Messsignale merklich. Beim Beispiel gemäss Fig. 7 ist dies kurz nach dem Zeitpunkt t17 der Fall, wo das jeweilige Signal U₁, U₂, U₃ deutlich abfällt bzw. ansteigt. Die Bearbeitung wird dann unterbrochen und das Loch wird anschliessend noch mit einer bestimmten vorgegebenen Anzahl Pulse des Bearbeitungsstrahls bearbeitet. Beim Beispiel gemäss Fig. 7 sind es 3 Pulse. Je nach Anwendungszweck können es weniger oder mehr sein. Durch diese nachträglichen Pulse ist gewährleistet, dass die Austrittsöffnung des Loches auf den gewünschten Enddurchmesser aufgeweitet wird. Vorzugsweise ist beim Nachformen die Länge der einzelnen Pulse kleiner gewählt als die Länge der Pulse vor dem Durchbruch. Das heisst z. B. bei der Fig. 7, dass vorzugweise das Zeitintervall t13 bis t14 grösser ist als das Zeitintervall t19 bis t20. Schliesslich wird der Bohrvorgang beendet, beim Beispiel gemäss Fig. 7 zum Zeitpunkt t24

Der Parameter Q erreicht im Beispiel gemäss Fig. 7 immer das gleiche Niveau, während Q_{A} mit der Zeit abnimmt. Je nach Anwendungszweck ist es möglich, während des Bohrens für Q und/oder Q_{A} andere Niveaus einzustellen.

Um das Bohren gesteuert durchführen zu können, wird beispielsweise ein mathematisches Modell eingesetzt, welches u. a. aus den Parametern des zu bohrenden Loches wie Tiefe und Form die Prozessparameter bestimmt. Derartige Prozessparameter sind z. B.: Materialgrössen wie Dicke und Zusammensetzung, die zu bohrenden Länge L des jeweiligen Loches, die gemessenen Werte für die Positionskoordinaten der Werkstücksoberfläche, die Grösse von Q und Q_{A} in Abhängigkeit der Bohrtiefe T, Druck der von der Pumpenvorrichtung 4 geförderten Flüssigkeit, Zeitpunkt, wo vom kontinuierlichen in den gepulsten Modus übergegangen wird (im Beispiel gemäss Fig. 7 Zeitpunkt t4), Zeitpunkte, wo das Bohrloch durch einen reinen Bearbeitungsstrahl ausgewaschen wird (im Beispiel gemäss Fig. 7 zwischen t2 und t3 sowie zwischen t11 und t12), Breite der Pulse sowie Pulsfrequenz, Anzahl der Pulse nach dem Durchbruch (im Beispiel gemäss Fig. 7 drei Pulse), Druck des Schutzmittels, mittels welchem das Werkstück befüllt ist. Ein weiterer Prozessparameter kann auch der Winkel α sein, unter welchem der Bearbeitungsstrahl auf die Oberfläche des Werkstücks trifft. Es ist auch möglich, dass dieser Winkel α beim Bohren desselben Loches variiert wird. Bei den Löchern 12c in Fig. 7 beispielsweise wird der Bearbeitungsstrahl z. B. zuerst etwas flacher und dann steiler gestellt, um die Aufweitung nahe der Aussenfläche zu formen, bevor er dann auf den Endwinkel eingestellt wird, um den restlichen Teils des Loches zu bohren.

Das mathematische Modell ist z. B. anhand von Messergebnissen aufstellbar, welche durch Bohren von Testlöchern in einem Werkstück gewonnen werden.

In einer Weiterführung des Verfahrens werden die Hohlräume des Werkstücks mit einem Schutzmittel in Form einer Flüssigkeit, z. B. Wasser gefüllt. Durchbricht nun der Bearbeitungsstrahl einen Wandabschnitt, wird er durch das flüssige Schutzmittel gedämpft, so dass er mit verringerter Energie auf einen Wandabschnitt trifft, der in Bohrrichtung gesehen hinter einem Loch angeordnet ist. Dieser Wandabschnitt ist daher vor einer Beschädigung geschützt.

Zum Befüllen des Werkstücks werden die in die Hohlräume führenden Aussenöffnungen abgedichtet, so dass über mindestens eine Zufuhrleitung Schutzmittel in die Hohlräume pumpbar ist. In Fig. 1 beispielsweise dienen der Flansch 27 zur Abdichtung und der Anschluss 26 zum Einleiten des Schutzmittels.

Nach dem Bohren des ersten Loches tritt Schutzmittel aus diesem heraus. Dieses ist beim Beispiel gemäss Fig. 1 im Becken 1b auffangbar und kann zirkulierend durch das Werkstück gepumpt werden.

Wird das Loch nach dem Durchbruch mittels einzelner Pulse nachgeformt, so ist das jeweilige Zeitintervall zwischen den Pulsen typischerweise grösser gewählt als die Länge des einzelnen Pulse. (So ist beim Beispiel gemäss Fig. 7 das Zeitintervall des Unterbruchs von t20 bis t21 grösser als die Pulslänge von t19 bis t20.) Dadurch wird erreicht, dass die Einwirkung eines Pulses auf das Schutzmittel so abgeklungen ist, dass dieses für den nächsten Puls wieder möglichst optimal dämpfend wirkt. Der Unterbruch ist vorzugsweise auch so zu gewählt, dass bei einem etwaigen Öffnen des Überdruckventils der Ventilmittel 28 dieses wieder geschlossen ist, bevor der nächste Puls eingeleitet wird.

In einer Weiterführung des Verfahrens kann der aktuelle Fluss des Schutzmittels aus dem gebohrten Loch dazu verwendet werden, die Qualität des gebohrten Loches zu beurteilen. So ist z. B. aus der gewünschten Dimension des zu bohrenden Loches bestimmbar, welcher Durchfluss Qₛ des Schutzmittels durch die Pumpe zu erwarten ist (z. B. in Einheiten von Liter pro Minute). Mittels eines Durchflussmessers ist der aktuelle Durchfluss bestimmbar. Ist er signifikant vom erwartenden Wert Qₛ verschieden, insbesondere wesentlich kleiner, so kann geschlossen werden, dass das Loch nicht die gewünschte Dimension aufweist und daher gegebenenfalls nachzubearbeiten ist. Es ist auch denkbar, die Form des Strahls, mit welchem das Schutzmittel nach dem Durchbruch aus dem Loch heraustritt, auszuwerten, beispielsweise optisch mittels Laser (z. B. jenem von der Messeinrichtung 19) oder Kamera. Ist das Loch z. B. zu klein, so wird der Strahl weniger weit als erwartet aus der Werkstücksoberfläche herausschiessen.

Eine Qualitätskontrolle anhand des Flusses des Schutzmittels ist besonders hilfreich beim Bohren einer Vielzahl von Löchern im Werkstück, da dadurch ein aufwändiges Ausmessen aller Löcher nach dem Bohren entfallen kann.

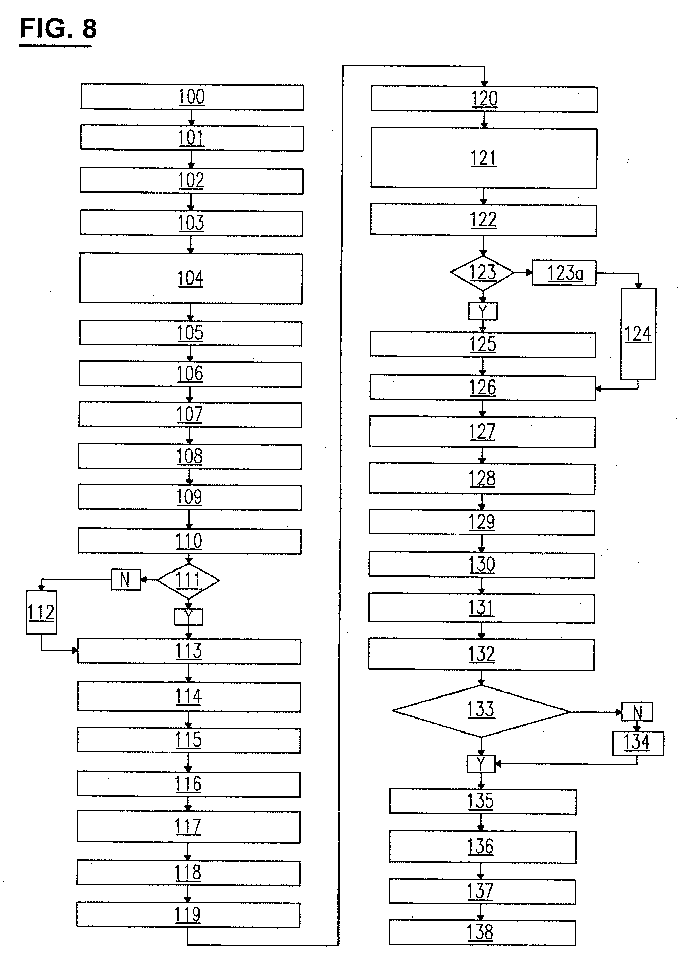

Fig. 8 zeigt ein Beispiel eines Ablaufes des Verfahrens, bei welchem in einer Turbinenschaufel als Werkstück eine Vielzahl von Löchern gebohrt wird, die in mehreren Reihen angeordnet sind. Nachfolgend werden die einzelnen Verfahrensschritte 100, 101, 102, etc. genauer erläutert. Bei den Verzweigungen 111, 123 und 133 steht Y für "Yes" ("Ja") bzw. N für "No" ("Nein) als Antwort für eine Entscheidung.
- 100:: Die Turbinenschaufel wird vorbereitet, u.a. abgedichtet, um ein Befüllen mit Schutzmittel zu ermöglichen, und
- 101:: in der Halteeinrichtung 11 eingespannt.
- 102:: Mittels der Messeinrichtung 19 wird die Turbinenschaufel vermessen. Dadurch werden u. a. die aktuellen Positionskoordinaten der Schaufeloberfläche relativ zum Koordinatennullpunkt bestimmt, um den Bearbeitungskopf zum Bohren der Löcher präzise an den gewünschten Stellen positionieren zu können.
- 103:: Es wird nun das Programm erstellt und/oder gemäss den im Schritt 102 erhaltenen Daten angepasst, um so die aktuell eingespannte Turbinenschaufel an den gewünschten Stellen mit Löchern zu versehen.
- 104:: Die Turbinenschaufel wird mit dem fliessfähigen Schutzmittel gefüllt. Beim Beispiel gemäss Fig. 2 erfolgt dies über den Anschluss 26 und durch das Spannfutter 21 hindurch.
- 105:: Es wird geprüft, ob die Turbinenschaufel dicht ist, so dass kein Schutzmittel austritt.
- 106:: Das Schutzmittel wird unter Druck p gesetzt. Zur Entlüftung ist das Ventil 28 geöffnet.
- 107:: Die Mittel zur Überwachung des Druckes p werden eingestellt.
- 108:: Die Zufuhreinrichtung 40 befindet sich in der Stellung, wo kein Abrasivmaterial zum Bearbeitungskopf 10 gelangen kann. Beim Beispiel gemäss Fig. 3 befindet sich das Schiebeteil 46 in der Stellung, wo der Bypasskanal 46b mit dem Einlass 45 verbunden ist.
- 109:: Das Förderband 44 wird eingeschaltet.
- 110:: Der Durchfluss des Abrasivmaterials wird überwacht und dahingehend
- 111:: überprüft, ob er in Ordnung, d. h. konstant ist. Ist dies nicht der Fall (Zweig mit "N"), so
- 112:: liegt ein Fehler vor, welchen der Benutzer behebt. Im anderen Fall (Zweig mit "Y") wird
- 113:: der Prozess freigegeben.
- 114:: Der Bearbeitungskopf 20 fährt die Anbohrposition an und wird ausgerichtet, so dass der Bearbeitungsstrahl im gewünschten Winkel auf die Werkstücksoberfläche treffen kann.
- 115:: Die Sensormittel 7, 8, 9 werden eingeschaltet.
- 116:: Die Pumpenvorrichtung 4 zur Erzeugung des Hochdruckes wird eingeschaltet.
- 117:: Der Druck der Flüssigkeit, der von der Pumpenvorrichtung 4 gefördert wird, wird eingestellt und überwacht.
- 118:: Das Hochdruckventil 31 wird geöffnet.
- 119:: Der Bohrvorgang wird gestartet gemäss den Prozessvorgaben.
- 120:: Die Dosiereinrichtung 42 wird so eingestellt, dass Abrasivmaterial zum Bearbeitungskopf 10 gelangt.
- 121:: Es wird im kontinuierlichen Modus gebohrt oder je nach der zu bohrenden Lochlänge wird bereits gepulst. Beim Beispiel gemäss Fig. 3 erfolgt der gepulste Modus durch Bewegen des Schiebeteils 46 und/oder Betätigen des Hochdruckventils 31.
- 122:: Der erste Bohrvorgang wird zum errechneten Zeitpunkt beendet.
- 123:: Es wird dabei laufend überprüft, ob der Durchbruch durch die Wandung noch nicht erfolgt ist. Erfolgt der Durchbruch früher als erwartet (Zweig 123a), erfolgt
- 124:: eine Schnellabschaltung des Bearbeitungsstrahls. Im anderen Fall (Zweig mit "Y") erfolgt
- 125:: das weitere Bohren im gepulsten Modus, bis der Durchbruch detektiert wird.
- 126:: Das gebohrte Loch wird durch wenige Pulse geformt.
- 127:: Gegebenenfalls wird das Loch weiterbearbeitet, beispielsweise mit weiteren Pulsen, wenn dies die Prozessvorgaben verlangen und/oder die Auswertung der Form des Loches noch nicht der gewünschten Qualität ergibt.
- 128:: Es wird die nächste Stelle am Werkstück angefahren, um das nächste Loch zu bohren, womit
- 129:: der Prozess wieder beim Schritt 108 beginnt.
- 130:: Schritte 108 bis 129 werden wiederholt, bis die Löcher in derselben Reihe gebohrt sind.
- 131:: Es wird der Druck p des Schutzmittels eingestellt und der Durchfluss des Schutzmittels durch die Reihe der gebohrten Löcher gemessen und mit dem zu erwartenden Wert verglichen. Alternativ oder ergänzend wird
- 132:: die Höhe gemessen, bis zu welcher das Schutzmittel in Form eines Strahls aus dem jeweiligen Loch tritt, und mit dem zu erwarteten Wert verglichen. Die Messung erfolgt z. B. mittels der Messeinrichtung 19, welche einen Laser aufweist.
- 133:: Es wird geprüft, ob der Vergleich im Schritt 131 bzw. 132 innerhalb der Toleranz liegt. Wenn nicht (Zweig mit "N"),
- 134:: ist das entsprechende Loch fehlerhaft und wird mit weiteren Pulsen nachbearbeitet. Gegebenenfalls wird der Prozess angepasst, indem z. B. das Programm beim Schritt 103 angepasst wird. Liegt das Messergebnis im Toleranzbereich (Zweig mit "Y") wird
- 135:: die nächste Reihe gebohrt.
- 136:: Der Bohrprozess wird solange wiederholt, bis alle gewünschten Löcher gebohrt sind.
- 137:: Das Werkstück 12 wird gereinigt, um z. B. das Abrasivmaterial zu entfernen.
- 138: Die gebohrten Löcher werden einer Endkontrolle unterzogen, indem nochmals der Durchfluss des Schutzmittels durch die Löcher erfasst und mit dem zu erwartenden Wert verglichen wird.

Aus der vorangehenden Beschreibung sind dem Fachmann zahlreiche Abwandlungen zugänglich, ohne den Schutzbereich der Erfindung zu verlassen, der durch die Ansprüche definiert ist.

So ist im oben beschriebenen Ausführungsbeispiel der Bearbeitungskopf 10 in mehreren Achsen bewegbar, während die Halteeinrichtung 11 lediglich um eine Drehachse drehbar ist. Je nach Anwendungszweck kann die Anzahl der Achsen, um welche Bearbeitungskopf und Halteeinrichtung bewegbar sind anders sein, um eine Relativbewegung zwischen Bearbeitungskopf und Werkstück zu ermöglichen. In einer Variante kann z. B. der Bearbeitungskopf 10 stationär angeordnet sein, während die Halteeinrichtung um mehrere Achse beweglich ist, z. B. um drei Translationsachsen und zwei Drehachsen. Die Halteeinrichtung kann dabei als Roboterarm ausgebildet sein.

Im oben beschriebenen Ausführungsbeispiel ist das Werkstück 12 liegend ausgerichtet. Die Anlage kann auch so ausgelegt sein, dass das Werkstück 12 in einer anderen Lage gehalten ist, z. B. auch senkrecht verlaufend.

Beim Beispiel gemäss Fig. 2 sind drei Sensoren 7, 8, 9 zur Erfassung des Durchbruches dargestellt. Dadurch wird eine Redundanz in der Messung erzielt. Die Anzahl der Sensoren kann auch anders sein und eins, zwei oder mehr betragen.

Im oben beschriebenen Ausführungsbeispiel wird der Fluss des Schutzmittels durch das gebohrte Loch dazu verwendet werden, dessen Qualität zu beurteilen. Es ist auch denkbar, ein anderes Medium zu verwenden. Beispielsweise kann Luft durch ein jeweiliges Loch geleitet und deren Fluss erfasst werden. Werden Abweichungen vom theoretischen Wert gemessen, so entspricht die Form des Loches, z.B. dessen Minimaldurchmesser, nicht den gewünschten Massen. Entsprechend kann das Loch nachbearbeitet werden.

## Patentansprüche

1. Verfahren zum Bohren mindestens eines Loches (12b, 12c, 12d) in einem vorderen Wandabschnitt eines Werkstücks (12) mittels eines Bearbeitungsstrahls aus Flüssigkeit, welcher bei Bedarf Abrasivmaterial beigemischt ist, wobei sich der vordere Wandabschnitt in Bohrrichtung gesehen vor einem hinteren Wandabschnitt des Werkstücks befindet, der mit einem Zwischenraum beabstandet zum vorderen Wandabschnitt angeordnet ist, **dadurch gekennzeichnet, dass** das Loch (12b, 12c, 12d) so erzeugt wird, dass es zumindest teilweise durch Verwendung von Flüssigkeit und Abrasivmaterial gebohrt wird und dass das Loch (12b, 12c, 12d) zumindest teilweise gebohrt wird, indem der Bearbeitungsstrahl gepulst auf den vorderen Wandabschnitt auftrifft, wobei der gepulste Bearbeitungsstrahl erzeugt wird, indem das Auftreffen der Flüssigkeit und/oder des Abrasivmaterials auf den vorderen Wandabschnitt wiederkehrend unterbrochen wird.

2. Verfahren nach Anspruch 1, wobei mittels Sensormittel (7, 8, 9) der Zeitpunkt erfasst wird, bei welchem der Bearbeitungsstrahl den vorderen Wandabschnitt durchbricht.

3. Verfahren nach einem der vorangehenden Ansprüche, wobei nach dem Zeitpunkt, bei welchem der Bearbeitungsstrahl den vorderen Wandabschnitt durchbrochen hat, das Loch (12b, 12c, 12d) durch den gepulsten Bearbeitungsstrahl in der Form nachbearbeitet wird, wobei vorzugsweise die Anzahl der Pulse für die Nachbearbeitung kleiner als 20, bevorzugter kleiner als 15 und noch bevorzugter kleiner als 10 ist.

4. Verfahren nach einem der vorangehenden Ansprüche, wobei der Zwischenraum (12a) zwischen dem vorderen und hinteren Wandabschnitt mit einem fliessfähigen Schutzmittel, welches vorzugsweise auch zur Erzeugung des Bearbeitungsstrahl verwendet wird, gefüllt wird, vorzugsweise befindet sich das Schutzmittel unter Druck im Zwischenraum (12a), so dass es aus dem Loch (12b, 12c, 12d) fliesst, wenn der Bearbeitungsstrahl den vorderen Wandabschnitt durchbricht.

5. Verfahren nach Anspruch 4, wobei zur Analyse der Qualität des gebohrten Loches (12b, 12c, 12d) der Fluss des Schutzmittels durch das Loch und/oder die Form des Strahls ausgewertet wird, welcher das Schutzmittel beim Austritt aus dem Loch aufweist.

6. Verfahren nach einem der vorangehenden Ansprüche, wobei in Abhängigkeit der zu bohrenden Lochlänge L das ganze Loch (12b, 12c, 12d) durch einen gepulsten Bearbeitungsstrahl gebohrt wird oder ein erster Anteil der Lochlänge L gebohrt wird, indem der Bearbeitungsstrahl permanent auf den vorderen Wandabschnitt auftrifft, und ein zweiter Anteil der Lochlänge L gebohrt wird, indem der Bearbeitungsstrahl gepulst auf den vorderen Wandabschnitt auftrifft.

7. Verfahren nach Anspruch 6, wobei in der Phase des Bohrens, in welcher der Bearbeitungsstrahl permanent auf den vorderen Wandabschnitt auftrifft, das Auftreffen des Abrasivmaterials auf den vorderen Wandabschnitt ein oder mehrmals unterbrochen wird, um im Bohrloch angesammeltes Abrasivmaterial herauszufördern.

8. Bearbeitungsanlage, mit welcher das Verfahren nach einem der vorangehenden Ansprüche durchführbar ist, wobei die Bearbeitungsanlage im Betrieb zum Bohren von Löchern (12b, 12c, 12d) in einem Werkstück (12) mindestens einen Bearbeitungsstrahl erzeugt und zwischen einem kontinuierlichen Modus, bei welchem der Bearbeitungsstrahl aus Flüssigkeit und Abrasivmaterial kontinuierlich auf das Werkstück auftrifft, und einem gepulsten Modus umschaltbar ist, bei welchem der Bearbeitungsstrahl gepulst ist, so dass das Auftreffen der Flüssigkeit und/oder des Abrasivmaterials auf das Werkstück (12) unterbrochen wird, wobei die Bearbeitungsanlage eine Steuerung (3) aufweist, die mit einem Programm ausgestattet ist, bei dessen Ausführung das Verfahren durchführbar ist

9. Bearbeitungsanlage nach Anspruch 8, mit einer Befüllungseinrichtung (26) zum Befüllen des Werkstücks (12) mit einem fliessfähigen Schutzmittel.

10. Bearbeitungsanlage nach einem der Ansprüche 8 bis 9, mit Sensormitteln (7, 8, 9) zum Erfassen des Zeitpunktes, wenn der Bearbeitungsstrahl eine Wandung des Werkstücks (12) durchbricht, wobei die Sensormittel vorzugsweise eingerichtet sind Schwingungen in einem Festkörper, in einer Flüssigkeit und/oder in der Luft zu erfassen, besonders bevorzugt umfassen die Sensormittel einen Schallemisionssensor und/oder ein Mikrofon, insbesondere Unterwassermikrofon.

11. Bearbeitungsanlage nach einem der Ansprüche 8 bis 10, mit einer Zufuhreinrichtung (40, 40') zur Zufuhr von Abrasivmaterial, welche Mittel (49) zur Bestimmung der zugeführten Menge (Q_{A}) an Abrasivmaterial und/oder einen Bypasskanal (46b, 52) aufweist, durch welchen Abrasivmaterial leitbar ist, um die Beimischung zum Bearbeitungsstrahl zu unterbrochen.

12. Bearbeitungsanlage nach Anspruch 11, wobei der Bypasskanal (46b) zwischen zwei Stellungen hin und her bewegbar und/oder mit einem Auslass (42b) verbunden ist, um Abrasivmaterial abzuleiten.

13. Bearbeitungsanlage nach einem der Ansprüche 8 bis 12, mit einem Bearbeitungskopf (10), aus welchem im Betrieb der Bearbeitungsstrahl austritt, und einer Halteeinrichtung (11), welche einen Haltekopf (22) zum Halten des Werkstücks (12) umfasst, wobei der Bearbeitungskopf und der Haltekopf relativ zueinander translatorisch und rotatorisch bewegbar sind, wobei vorzugsweise eine Bewegung entlang dreier translatorischer Achsen (X, Y, Z) und um mindestens zwei Drehachsen (B, C, D) möglich ist.

14. Computerprogramm, wobei bei dessen Ausführung auf einer Anlage nach einem der Ansprüche 8 bis 13 das Verfahren nach einem der Ansprüche 1 bis 7 durchgeführt wird.

15. Datenträger, auf welchem das Computerprogramm nach Anspruch 14 gespeichert ist.

## Claims

1. Method for drilling at least one hole (12b, 12c, 12d) into a front wall section of a workpiece (12) by way of a machining jet formed from liquid, to which abrasive material is admixed as needed, wherein the front wall section is located in front of a rear wall section of the workpiece, as seen looking in the drilling direction, the rear wall section being disposed with an intermediate space at a distance from the front wall section, **characterized in that** the hole (12b, 12c, 12d) is produced such it is drilled at least partially by using liquid and abrasive material and **in that** the hole (12b, 12c, 12d) is drilled at least partially by the machining jet impinging on the front wall section in a pulsed manner, wherein the pulsed machining jet is generated by the recurrent interruption of the impingement of the liquid and/or of the abrasive material on the front wall section.

2. Method according to claim 1, wherein the time at which the machining jet penetrates the front wall section is detected by way of sensor means (7, 8, 9).

3. Method according to any one of the preceding claims, wherein the shape of the hole (12b, 12c, 12d) is reworked using the pulsed machining jet after the time at which the machining jet has penetrated the front wall section, wherein the number of pulses for reworking preferably being less than 20, more preferably less than 15, and most preferably less than 10.

4. Method according to any one of the preceding claims, wherein the intermediate space (12a) between the front and rear wall sections is filled with a free-flowing protective agent, which is preferably also used to generate the machining jet, the protective agent in the intermediate space (12a) preferably being pressurized so that it flows out of the hole (12b, 12c, 12d) when the machining jet penetrates the front wall section.

5. Method according to claim 4, wherein the flow of the protective agent through the hole and/or the shape of the stream, which the protective agent has upon exiting the hole, are evaluated to analyze the quality of the drilled hole (12b, 12c, 12d).

6. Method according to any one of the preceding claims, wherein, as a function of the hole length L to be drilled, the entire hole (12b, 12c, 12d) is drilled using a pulsed machining jet, or a first portion of the hole length L is drilled by the machining jet permanently impinging on the front wall section, and a second portion of the hole length L is drilled by the machining jet impinging on the front wall section in a pulsed manner.

7. Method according to claim 6, wherein the impingement of the abrasive material on the front wall section is interrupted once or multiple times during the drilling phase in which the machining jet permanently impinges on the front wall section, so as to drive out abrasive material that has collected in the drilled hole.

8. Machining arrangement, by way of which the method according to any one of the preceding claims can be carried out, wherein during operation for drilling holes (12b, 12c, 12d) into a workpiece (12) the machining arrangement generates at least one machining jet and can be switched between a continuous mode, in which the machining jet formed from liquid and abrasive material continuously impinges on the workpiece, and a pulsed mode, in which the machining jet is pulsed, so that the impingement of the liquid and/or of the abrasive material on the workpiece (12) is interrupted, wherein the machining arrangement comprises a controller (3) which is equipped with a program, during the execution of which the method can be carried out.

9. Machining arrangement according to claim 8, comprising a filling device (26) for filling the workpiece (12) with a free-flowing protective agent.

10. Machining arrangement according to any one of the claims 8 to 9, comprising sensor means (7, 8, 9) for detecting the time when the machining jet penetrates a wall of the workpiece (12), the sensor means preferably being configured to detect oscillations in a solid body, in a liquid and/or in the air, particularly preferably the sensor means including an acoustic emission sensor and/or a microphone, in particular an underwater microphone.

11. Machining arrangement according to any one of claims 8 to 10, comprising a feed device (40, 40') for feeding abrasive material, which includes means (49) for determining the fed quantity (Q_{A}) of abrasive material and/or a bypass channel (46b, 52) through which abrasive material can be conducted so as to interrupt the admixing to the machining jet.

12. Machining arrangement according to claim 11, wherein the bypass channel (46b) can be moved back and forth between two positions and/or is connected to an outlet (42b) so as to discharge abrasive material.

13. Machining arrangement according to any one of claims 8 to 12, comprising a machining head (10) from which the machining jet exits during operation, and a holding device (11) which includes a holding head (22) for holding the workpiece (12), wherein the machining head and the holding head are movable relative to one another in a translational and a rotational fashion, preferably a movement along three translational axes (X, Y, Z) and about at least two rotational axes (B, C, D) being possible.

14. Computer program, wherein during the execution of which on an arrangement according to any one of claims 8 to 13 the method according to any one of claims 1 to 7 is carried out.

15. Data carrier, on which the computer program according to claim 14 is stored.

## Revendications

1. Procédé de perçage d'au moins un trou (12b, 12c, 12d) dans une section de paroi avant d'une pièce à usiner (12) au moyen d'un jet d'usinage constitué d'un liquide auquel est mélangé au besoin un abrasif, la section de paroi avant, vue dans la direction de perçage, se trouvant devant une section de paroi arrière agencée de façon espacée de la section de paroi avant par un espace intermédiaire, **caractérisé en ce que** le trou (12b, 12c, 12d) est produit **en ce qu'**il est percé au moins partiellement à l'aide de liquide et d'abrasif, et que le trou (12b, 12c, 12d) est percé au moins partiellement par l'incidence pulsée du jet d'usinage sur la section de paroi avant, le jet d'usinage pulsé étant généré en interrompant répétitivement l'incidence du liquide et/ou de l'abrasif sur la section de paroi avant.

2. Procédé selon la revendication 1, où le moment où le jet d'usinage perce la section de paroi avant est détecté par des moyens capteurs (7, 8, 9).

3. Procédé selon l'une des revendications précédentes, où après le moment où le jet d'usinage a percé la section de paroi avant, la forme du trou (12b, 12c, 12d) est finie à l'aide du jet d'usinage pulsé, le nombre d'impulsions utilisées pour le finissage étant préférablement inférieur à 20, plus préférablement inférieur à 15 et encore plus préférablement inférieur à 10.

4. Procédé selon l'une des revendications précédentes, où l'espace intermédiarie (12a) entre les sections de paroi avant et arrière est rempli d'un produit de protection coulant qui est préférablement aussi utilisé pour produire le jet d'usinage, lequel produit de protection est préférablement contenu dans ledit espace intermédiaire (12a) sous pression de telle manière qu'il coule hors du trou (12b, 12c, 12d) lorsque le jet d'usinage perce la section de paroi avant.

5. Procédé selon la revendication 4, où le flux du produit de protection à travers le trou et/ou la forme du jet que présente le produit de protection à la sortie du trou est évalué afin d'analyser la qualité du trou percé (12b, 12c, 12d).

6. Procédé selon l'une des revendications précédentes, où en fonction de la longueur L du trou à percer, soit le trou entier (12b, 12c, 12d) est percé par un jet d'usinage pulsé, soit une première partie de la longueur L du trou est percée par l'incidence permanente du jet d'usinage sur la section de paroi avant et une deuxième partie de la longueur L du trou est percée par l'incidence pulsée du jet d'usinage sur la section de paroi avant.

7. Procédé selon la revendication 6, où dans la phase du perçage pendant laquelle l'incidence du jet d'usinage sur la section de paroi avant est permanente, l'incidence de l'abrasif sur la section de paroi avant est interrompue une ou plusieurs fois afin de faire sortir la matière abrasive accumulée dans le trou percé.

8. Installation d'usinage permettant de mettre en oeuvre le procédé selon l'une des revendications précédentes, où pour percer des trous (12b, 12c, 12d) dans une pièce (12) à usiner, l'installation d'usinage génère en cours de fonctionnement au moins un jet d'usinage et est commutable entre un mode continu où l'incidence du jet d'usinage constitué de liquide et d'abrasif est permanente, et un mode pulsé où le jet d'usinage est pulsé de telle manière que l'incidence du liquide et/ou de l'abrasif sur la pièce (12) à usiner est interrompue, l'installation d'usinage comprenant une commande (3) munie d'un programme dont l'exécution permet la mise en oeuvre du procédé.

9. Installation d'usinage selon la revendication 8, comprenant un dispositif de remplissage (26) pour remplir la pièce (12) à usiner d'un produit de protection coulant.

10. Installation d'usinage selon l'une des revendications 8 à 9, comprenant des moyens capteurs (7, 8, 9) pour détecter le moment où le jet d'usinage perce une paroi de la pièce (12) à usiner, les moyens capteurs étant préférablement agencés de manière à détecter des vibrations dans un corps solide, un liquide et/ou dans l'air, les moyens capteurs comprenant particulièrement préférablement un capteur d'émission sonore et/ou un microphone, plus particulièrement un hydrophone.

11. Installation d'usinage selon l'une des revendications 8 à 10, comprenant un dispositif d'alimentation (40, 40') pour alimenter de l'abrasif lequel présente des moyens (49) permettant de déterminer la quantité alimentée (Q_{A}) d'abrasif et/ou un conduit de dérivation (46b, 52) à travers lequel l'abrasif peut être conduit afin d'interrompre son admixtion au jet d'usinage.

12. Installation d'usinage selon la revendication 11, où le conduit de dérivation (46b) est déplaçable entre deux positions et/ou relié à une sortie (42b) permettant de déverser de l'abrasif.

13. Installation d'usinage selon l'une des revendications 8 à 12, comprenant une tête d'usinage (10) de laquelle sort le jet d'usinage en cours de fonctionnement, et un dispositif de retenue (11) muni d'une tête de retenue (22) pour retenir la pièce (12) à usiner, la tête d'usinage et la tête de retenue étant déplaçables l'une par rapport à l'autre en translation et en rotation, et un mouvement le long de trois axes de translation (X, Y, Z) et autour d'au moins deux axes de rotation (B, C, D) étant préférablement possible.

14. Programme informatique lors de l'exécution duquel sur une installation selon l'une des revendications 8 à 13 le procédé selon l'une des revendications 1 à 7 est mis en oeuvre.

15. Support de données sur lequel le programme informatique selon la revendication 14 est enregistré.
